Europäisches Patentamt

(19) European Patent Office

Office européen des brevets

(11) Publication number: **0 055 763**
**B1**

# (12) EUROPEAN PATENT SPECIFICATION

(45) Date of publication of patent specification: **30.11.88**

(51) Int. Cl.⁴: **G 06 F 13/12, G 06 F 13/22**

(21) Application number: **81902109.8**

(22) Date of filing: **02.07.81**

(86) International application number:
**PCT/US81/00901**

(87) International publication number:
**WO 82/00374 04.02.82 Gazette 82/04**

(54) **INPUT/OUTPUT PROCESSOR AND METHOD OF COMMUNICATION FOR DATA PROCESSING SYSTEM.**

(30) Priority: **11.07.80 US 168896**

(43) Date of publication of application:
**14.07.82 Bulletin 82/28**

(45) Publication of the grant of the patent:
**30.11.88 Bulletin 88/48**

(84) Designated Contracting States:
**AT CH DE FR GB LI NL**

(56) References cited:
**US-A-3 512 133**
**US-A-3 810 114**
**US-A-3 995 258**
**US-A-4 016 458**
**US-A-4 059 851**
**US-A-4 067 059**
**US-A-4 075 691**
**US-A-4 181 936**
**US-A-4 200 930**

**IBM TECHNICAL DISCLOSURE BULLETIN, vol.
17, no. 11, April 1975, pages 3272-3273, New
York, US; J.J. DUVALSAINT et al.: "Remote
station controller"**

(73) Proprietor: **NCR Corporation
World Headquarters
Dayton, Ohio 45479 (US)**

(72) Inventor: **CHARI, Venu
8633 Ara Place
San Diego, CA 92126 (US)**
Inventor: **DUKE, Jack Ronald
1954 Montiel Road
San Marcos, CA 92026 (US)**

(74) Representative: **Robinson, Robert George
International Patent Department NCR Limited
206 Marylebone Road
London NW1 6LY (GB)**

(56) References cited:
**IBM TECHNICAL DISCLOSURE BULLETIN, vol.
21, no. 7, December 1978, pages 2633-2645,
New York, US; D.M. NAGEL et al.:
"Programmable communications subsystem
having controller incorporating
microprocessor"**

**Fall Joint Computer Conference, 1972, pp.
719-725**

Courier Press, Leamington Spa, England.

## Description

Technical Field

This invention relates to an input/output (I/O) processor and method of communication implemented by the processor for a data processing system.

This application is related to an international application filed by the present Applicants on the same day as the present application entitled "Input/Output System and Method of Communication for Peripheral Devices in Data Processing System"; of WO 82/00373 (EP-A-81301997.7).

Background Art

In existing data processing systems, an input/ output (I/O) processor may be provided coupled between the processing element and peripheral subsystems for efficient control of the subsystems. Once interrupted, the I/O processor is dedicated to the peripheral subsystem for the total transmission, the total transmission including various transmission sequences such as command, data and status.

Thus, U.S. Patent 4,079,452 discloses an input/ output processor comprising a programmer controller module coupled to a plurality of peripheral subsystems, each subsystem comprising an interface adapter connected to a plurality of peripheral devices. The controller module contains subroutines of different communications protocols for controlling the peripheral devices and effecting data transfers. The controller module is dedicated to a peripheral device for the duration of a transmission sequence.

The problem with such an arrangement is that it is not sufficiently fast or flexible to cope with the requirements of a mainframe data processing system with a high data processing capability and which requires fast servicing of peripherals to maximize use of the resources of the system.

From IBM Technical Disclosure Bulletin, Volume 21, No. 7, December 1978, pages 2633-2645, there is known a data processing system having a processing element, a central memory coupled to the processing element, and an I/O processor coupled to the central memory, the I/O processor having a plurality of scanner lines and a controller incorporating a microprocessor. The system also includes an interrupting resource for interrupt preparation of the I/O processor.

From US-A-4016548 there is known a communications multiplier module which assembles serial-by-bit data from a plurality of input ports into parallel-by-bit characters before transmitting them to a host computer.

From Fall Joint Computer Conference, 1972, pages 719-725, there is known a centralized polling system including a bus controller and a plurality of peripheral devices. When the bus controller receives a request, it begins polling the devices to determine which device is making the request. The polling is carried out by counting on the polling lines, and when the count corresponds to a requesting device that device raises a bus busy line. The controller then stops the polling until the device has completed its transmission and removed the busy signal.

Disclosure of the Invention

It is an object of the present invention to provide a method of communicating between a plurality of peripheral subsytstems and a data processing system, which method is capable of efficient operation under high rates of data flow.

According to the invention, there is provided a method of communication in a data processing system having at least one processing element, a central memory coupled thererto and an I/O processor coupled to said central memory, and wherein said I/O processor has a plurality n of bit serial channel ports for providing a corresponding plurality of transmission paths in a bit serial link format for communicating information to a corresponding plurality n of peripheral subsystems, characterized in that said I/O processor has a plurality m, where n is greater than m, of serial channel control processors and a dynamic channel exchange coupled to said serial channel control processors, said method of communication including the steps of: a) checking for a processing element request for communication with one of said plurality of peripheral subsystems; b) performing an initial communication sequence with the peripheral subsystem selected in response to said processing element request, said initial communication sequence comprising a first plurality of message exchanges between one of said serial channel control processors and the selected peripheral subsystem; c) polling said plurality of bit serial channel ports for detecting the existence of a peripheral ready indication from a peripheral subsystem in respect of which a said initial communication sequence has been performed; and d) performing a further communication sequence with the peripheral subsystem in respect of which a peripheral ready indication was detected in step c), said further communication sequence comprising a second plurality of message exchanges between said peripheral subsystem and an available serial channel control processor which may be different from said one of said serial channel control processors.

By providing at least one serial channel control processor and a dynamic channel exchange coupling the processor to the bit serial lines, it is possible to implement a message protocol between peripheral subsystems and the data processor which provides fast and effective communication wherein the input/output processor is not dedicated to a single peripheral device for the duration of a transaction with that device.

Brief Description of the Drawings

A preferred embodiment of the invention will now be described with reference to the accompanying drawings, in which:

Fig. 1 is a block diagram of a data processing system having a preferred architecture;

Fig. 2 depicts the format of the central memory I/O task structure;

Fig. 3 is a block diagram showing the switchable data paths through a dynamic channel exchange;

Fig. 4 is a block diagram of a serial channel control processor;

Figs. 5A and 5B show the control store microinstruction word format;

Figs. 6A and 6B are a flowchart illustrating the operation of the system;

Fig. 6C shows the relationship of Figs. 6A and 6B.

Fig. 7 depicts a typical message sequence;

Fig. 8 shows the message formats;

Fig. 9 shows the command messages in a typical data output sequence;

Fig. 10 shows the command messages in a typical data input sequence;

Fig. 11 is a detailed flow diagram of the interrogation loop performed by an SCCP;

Fig. 12 is a detailed flow diagram of the command offer sequence performed by an SCCP; and

Figs. 13A-C are detailed flow diagrams of the service offer sequence performed by an SCCP.

Best Mode for Carrying Out the Invention

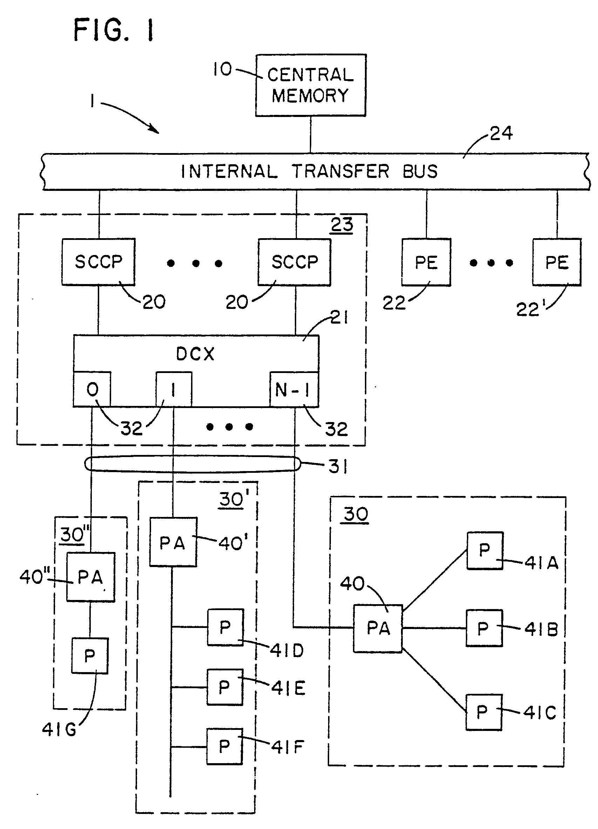

Referring to Fig. 1, the data processing system includes an Input/Output Subsystem (IOSS)1 comprising an I/O Task Structure (IOTS) shown as the central memory 10, the serial channel control processors (SCCPs) 20, the dynamic channel exchange (DCX) 21, and includes the peripheral subsystems 30, 30', 30'', which include the peripheral adapters (PA) 40, 40', 40'' and the associated peripheral devices 41A-41G. In a data processing system, at least one processing element, 22, 22' is coupled to the central memory 10. The SCCPs 20 and the DCX 21 together form what is more generally known as an I/O processor 23, the I/O processor being coupled to the central memory 10. The coupling of the IOSS elements is shown in Fig. 1 utilizing an internal transfer bus 24, although it will be understood by those skilled in the art that any standard coupling means may be used. The DCX interfaces with the peripheral subsystems 30 utilizing bit serial channels 32 connected to peripheral adapters 40 by bit serial lines 31.

The serial channel control processors 20 form part of the I/O processor 23. A message protocol is defined for the transmission of information between the central memory 10 and the peripheral adapters 40. The serial channel control processors 20 are implemented to perform the various control, transmission initiation, and termination functions between the central memory 10 and the peripheral adapter 40 in accordance with the defined message protocol. These functions are implemented by the use of a ROM and the associated control logic within the SCCPs 20, which will be described in further detail hereinunder.

A. IOSS System Overview

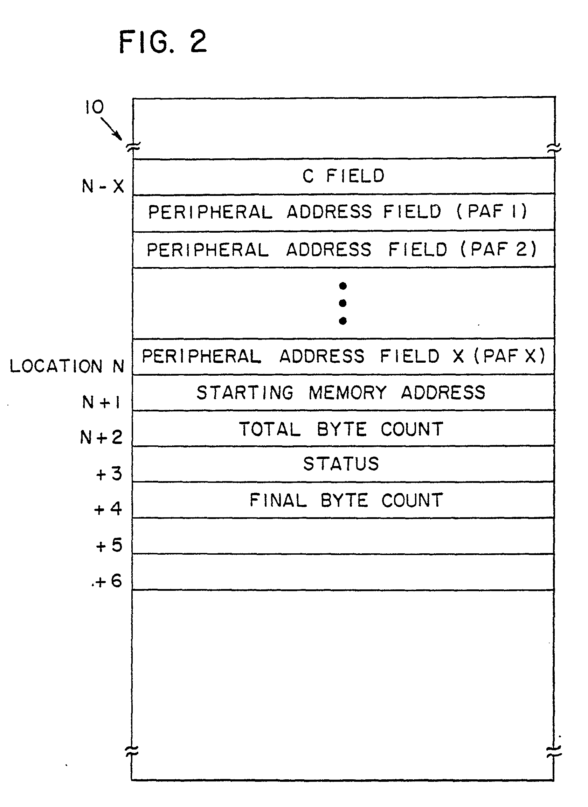

Before describing the overall IOSS system operation, it will be advantageous to give a brief description of the individual elements of the IOSS system. Referring to Fig. 2, the I/O task structure (IOTS) of central memory 10 is a memory resident set of tables and lists, denoted herein as I/O Field (IOF), that permit communication between the I/O software of the processing element or elements 22, 22' and the serial channel control processors 20. The tables and lists of the IOTS of central memory 10 make up the control information utilized by SCCPs 20. The Peripheral Address Fields (PAF) indicate the specific peripheral to be addressed, and the function to be performed, the number of PAF bytes of the preferred embodiment can be as many as twelve depending on the peripheral subsystems 30. The Starting Memory Address specifies the central memory 10 starting location of the data to be transmitted or received, the Total Byte Count indicates the number of words to be transmitted or received, and the Final Byte Count indicates the number of bytes transmitted at the end of a transfer sequence. The C field is utilized to check that an SCCP is communicating with the correct peripheral. The Status word is utilized to indicate the current state of the communication.

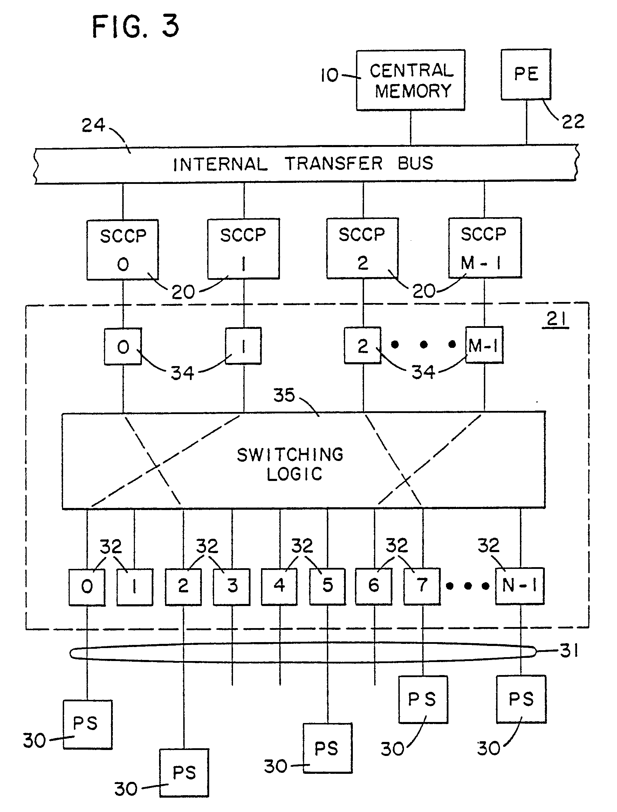

Referring to Fig. 3, the DCX 21 is shown interfacing with SCCPs 20 through standard interface SCCP ports 34, and interfacing the peripheral subsystems 30 through bit serial channels 32 via bit serial lines 31. There are m-SCCP ports 34 and n-bit serial channels (BSC) 32, with the number m being less than the number n. In the preferred embodiment, m is four and n is eight, expandable up to 8 and 32 respectively. The SCCP ports 34 and the bit serial channels 32 each connect to the switching logic 35. The switching logic 35 thereby allows an SCCP 20 to communicate with any peripheral adapter 40 by providing a data path between the SCCP 20 and the desired peripheral adapter 40.

A peripheral subsystem 30 includes a peripheral adapter 40 and at least one peripheral device 41. Each peripheral adapter 40 of IOSS performs the controller function for the associated peripheral device(s) 41 exchanging the control messages and data with an SCCP 20 in accordance with the defined message protocol. A message exchanges of the peripheral adapter 40 are implemented by the use of a ROM which is more fully described in the aforementioned copending application.

The serial channel control processors 20 are a small device-independent processors used to control the input and output of data between a processing element 22 and the peripheral subsystems 30. Still referring to Fig. 3, the SCCPs 20 communicate with the I/O software of the processing element 22 via the I/O task structure of central memory 10 and the internal transfer bus 24. Each SCCP 20 occupies one bus position on the internal transfer bus 24 and is connected to an associated SCCP port 34 of the DCX 21. An SCCP 20 can request communication to any bit serial channel 32 through switching logic 35 of DCX 21, but the requesting SCCP 20 may connect to and control only one BSC 32 at a time. Thus, the services between all the BSCs 32 are time shared, thereby permitting an SCCP 20 to control the I/O transfer between a processing element 22 and a peripheral subsystem 30. The control functions of the SCCP 20 will be described in detail hereinunder.

Data transmission is via bit serial channel 32 at a fixed transmission speed, the transmission speed utilized in the preferred embodiment being sixteen megabits per second (two megabytes per second). Transmission between the SCCPs 20 and the peripheral adapters 40, via the DCX 21, is independent of the transfer rate of the peripheral subsystems 30 or of the central memory 10. The SCCPs 20 and the peripheral adapters 40 of peripheral subsystems 30 contain buffers to facilitate this isolation. Communications over the BSC lines 31 is message oriented, so as to comply with a defined message protocol and a defined transmission protocol. In the preferred embodiment, up to 256, 8-bit bytes of data can be transferred in one direction as a block. BSC 32 connections are ordinarily maintained between SCCPs 20/DCX 21 as long as information transfer is occurring. By polling the BSCs 32 when no I/O transmissions are taking place, the SCCPs 20/DCX 21 are available to serve a waiting peripheral subsystem 30. In this way maximum bit serial channel 32 utilization is achieved and as multiple SCCPs 20 are available, load sharing is accomplished. The SCCPs 20/DCX 21 are peripheral independent and therefore can serve any peripheral subsystem 30. I/O system bandwidth can be increased by adding additional SCCPs 20.

B. SCCP Hardware Description

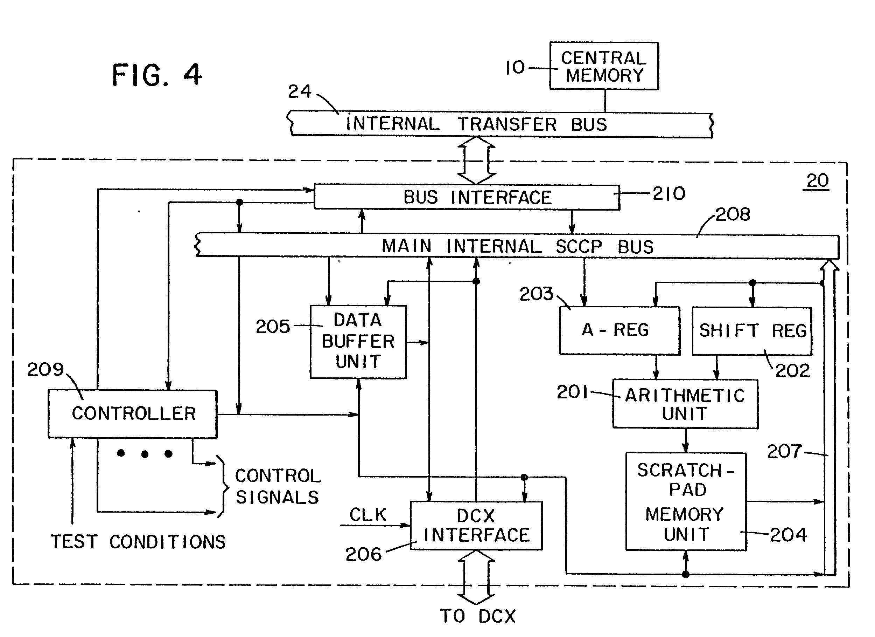

Fig. 4 shows a block diagram of an SCCP 20. The arithmetic unit 201 comprises an arithmetic and logic unit (ALU) and associated logic for performing standard arithmetic and logic functions. The arithmetic unit 201 operates on two eight-bit operands obtained from shift register 202 which provides the "B" operand and A-register 203 which contains the "A" operand. The A-register may be loaded via an internal bus 207 or via a main internal SCCP bus 208. The result of the ALU operation can be saved in a scratch pad memory unit 204. Various results of the ALU operations can be tested, such as a zero result, and inputted to a controller 209 as a TEST CONDITION signal. The implementation of arithmetic unit 201 is not shown in detail because it is well-known to those skilled in the art.

The scratch pad memory unit 204 is comprised of a scratch pad memory and an address counter. The scratch pad memory is loaded from arithmetic unit 201 and the address counter is loaded from controller 209. The contents of the scratch pad memory can be outputted to the internal bus 207 to be loaded into the A-register 203, the shift register 202, or onto the main internal SCCP bus 208 for ultimate loading into other registers of SCCP 20. In the preferred embodiment the scratch pad memory is a 1024 x 8 bit RAM. The data buffer unit 205 is coupled to the main internal SCCP bus 208 for storing information from central memory 10 via internal transfer bus 24 and bus interface 210, and is coupled to DCX interface 206 for storing information from a peripheral subsystem. Data buffer unit 205 is also coupled to main internal SCCP bus 208 and DCX interface 206 for outputting stored information to central memory 10 or to a peripheral subsystem 30. The data buffer unit 205 comprises a RAM, and an A-address counter and a B-address counter. A-address counter and B-address counter are loaded from the controller 209 for accessing RAM. In the preferred embodiment, the RAM of data buffer unit 205 comprises 1024 10-bit bytes. Eight bits of each byte comprise data, bit 9 is odd parity over the 9 bits and bit 10 is used to indicate the last data byte in the data block.

The bus interface 210 comprises the hardware needed to interface the SCCP 20 to the ITB 24. The bus interface 210 couples to main internal SCCP bus 208 and to controller 209. In the preferred embodiment, the bus interface 210 is the local bus adapter described in U.S. Patent No. 4,038,644, entitled "Destination Selection Apparatus for a Bus Oriented Computer System," assigned to the same assignee as the present application.

The controller 209 contains the control circuitry for the SCCP 20. The controller 209 is coupled to the central memory 10 via the bus interface 210 for communicating with the I/O software of the processing elements 22. The controller 209 contains a control store, a microinstruction register, an address control unit, and the decode logic which generates the control signals to control I/O (ie, bus interface 210 and DCX interface 206), arithmetic unit 201, registers 202, 203, scratch pad memory 204, data buffer unit 205, and busses 207, 208 according to the actions specified in the microinstruction. A program storage RAM is the control store for the SCCP 20 containing the microinstruction sequences for implementing the defined message protocol which will be described in detail hereinunder. The program storage RAM of the preferred embodiment is a 4096 x 36 bit RAM.

The DCX interface 206 comprises the logic to properly transmit the control and data messages between the SCCP 20 and the DCX 21 and performs a byte-to-bit transformation (transmission to a peripheral subsystem 30) or a bit-to-byte transformation (transmission from a peripheral subsystem 30). Internal to the SCCP 20, the DCX interface 206 couples to the data buffer unit 205 and the main internal SCCP bus 208 for transmitting information from the peripheral subsystem 30, and further couples to the data buffer unit 205 for receiving information from central memory 10. The DCX interface also couples to the controller 209 for receiving control signals and control information. A CLK signal is also supplied to the DCX interface 206 and to the peripheral subsystem 30.

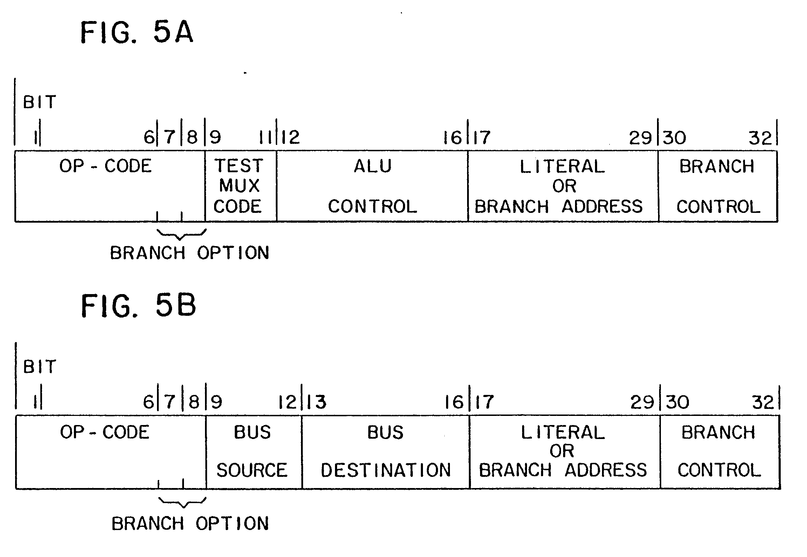

Referring to Figs. 5A and 5B, the control store microinstruction word format of the controller 209 is shown. The microinstruction word fields are composed of an Op-Code, Bus Source, Bus Destination, Test MUX Code, ALU Control, Literal or Branch Address and Branch Control. Bits 7 and 8 of the op-code, depending on the specific op-code, are used in conjunction with the branch control field. The op-code is an 8-bit field that deines the operation to be performed. The operation is decoded, and the control signals generated to control the arithmetic unit 201, A-register 203, shift register 202, scratch pad memory unit 204, data buffer unit 205, DCX interface 206, and bus interface 210. The bus source specifies the source which drives the main internal SCCP bus 208. The bus destination specifies the destination of the data on the main internal SCCP bus 208. The specified destination will only be loaded if the command specified by the op-code being executed requires it.

C. IOSS Systems Operation

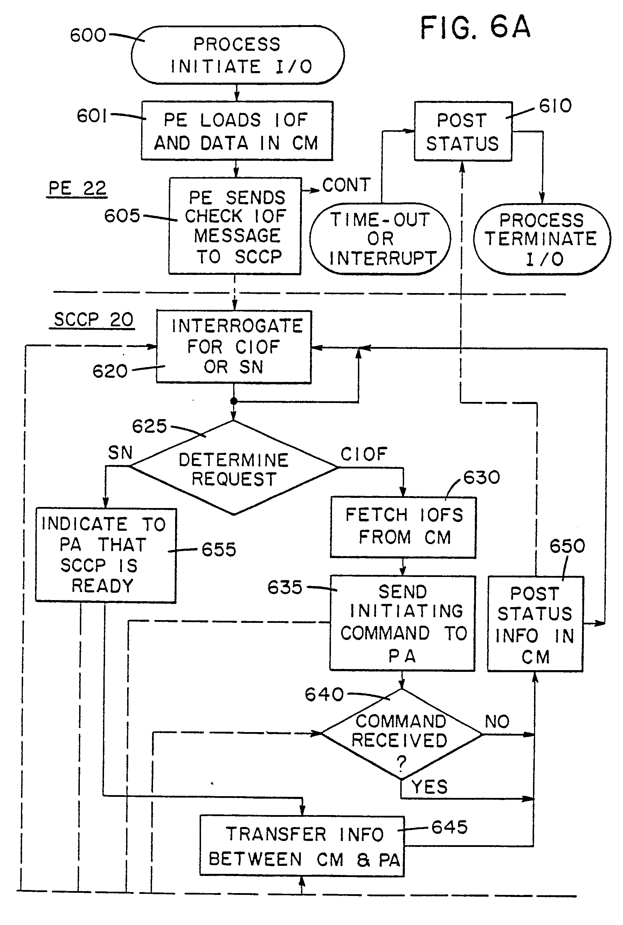

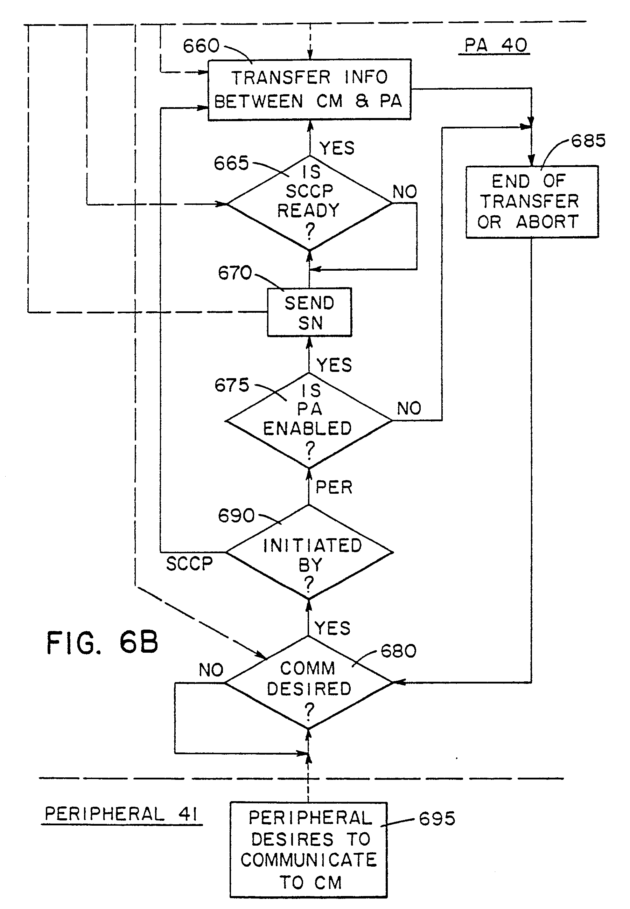

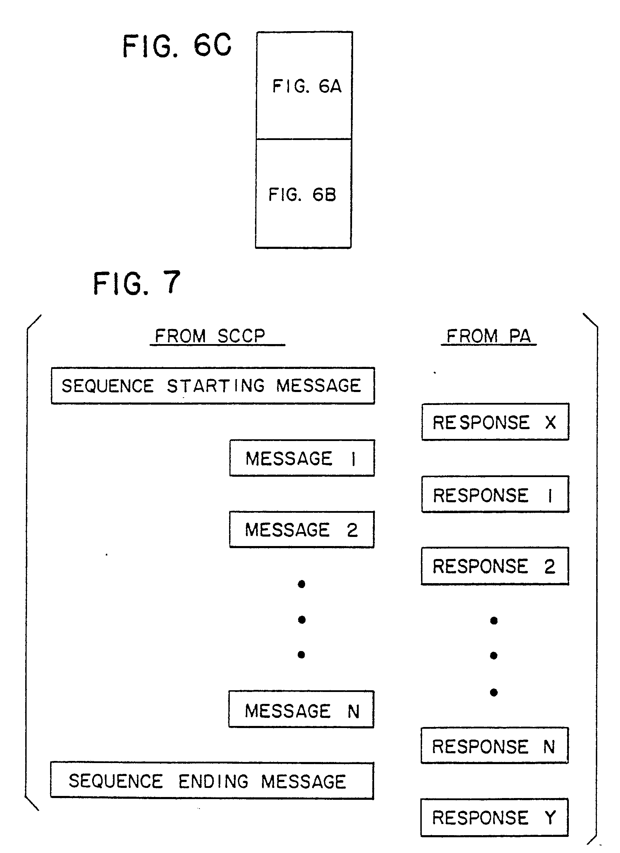

The systems operation will now be described with the aid of the flowcharts of Figs. 6A and 6B taken together as shown by Fig. 6C. Figs. 6A and 6B show a generalized function flow of the operations performed by the individual elements, namely a processing element 22, an SCCP 20, a peripheral adapter 40, and a peripheral device 41, in the overall I/O operation, the dotted lines indicating "control type" information transferred between elements.

When the processor element 22 desires to communicate to a peripheral 41, the Process Initiate I/O routine (Block 600) of the I/O software of the processor element 22 is executed which creates the I/O fields (IOF) and places these fields within the I/O task structure of central memory 10 (block 601), the I/O task structure being an area of central memory 10 allocated for storing the lists and tables utilized in performing the I/O function in accordance with the defined message protocol. After the IOFs and the data to be transferred to the peripheral 41 are stored within the proper locations of central memory 10, a message is sent to SCCP 20 (block 605) which indicates a check of the IOF of central memory 10 is to be performed (dotted line from block 605), the PE 22 continuing to execute its assigned task. The processor element 22 plays no further role in the transfer of information between central memory 10 and peripheral adapter 40. The I/O software of PE 22 reads the status word of the I/O task structure when the data transfer is complete (block 610), the I/O completion indicated to the I/O software via a message from the SCCP 20 or the I/O software times out the I/O if no termination has occurred. If the status signifies that the data transfer is completed, the next data transfer with that peripheral can be set up and initiated. If the status indicates an incomplete or a busy, a retry may be attempted or some other appropriate action may be taken by the I/O software.

When no I/O transmissions are taking place, the SCCP 20 is in an interrogation loop (block 620) testing for a Check IOF (CIOF) message from PE 20 (dotted line from block 605) or a Service Needed (SN) message (dotted line from block 670). When an input is received, the SCCP determines the specific request (block 625). (Assume for the present that a "Check IOF" message was received from PE 20.) When a check IOF message is received by the SCCP 20, the IOFs are read from central memory 10 (block 630). (The data contained in the IOFs is used by SCCP 20 to instruct the DCX 21 to connect the appropriate BSC 32.) The SCCP 20 then passes initiating command (or enabling) information (block 635) to the peripheral adapter 40 (dotted line from block 635) in accordance with the defined message protocol which is described in detail hereinunder. The peripheral adapter 40 responds to the SCCP 20 that the initiating command was received (dotted line from block 660). The SCCP 20 waits a specified amount of time for the response from the peripheral adapter 40 that the initiating (or enabling) command was received (block 640). The initial command transfer performed between CM 10 and PA 40 includes the transfer of command information (i.e., the command appended message exchange to be described in detail hereinunder) required by the PA 40 to properly communicate with any SCCP 20 which might subsequently service the PA 40 to handle the actual data exchange message sequence. When the initial transfer sequence is complete, the SCCP 20 disconnects from the PA 40, status information is stored in central memory 10 (block 650) and the SCCP 20 returns to interrogating loop (block 620). If the peripheral adapter 40 is busy or does not respond, the SCCP 20 stores the busy status in the appropriate location of the IOF and the transmission is terminated (block 650). The SCCP 20 then returns to the interrogating loop (block 620). After the initial transfer sequence, the SCCP 20 responds to the service needed indication. For output transfers (from the PE 22) initiated by the PE 22, the peripheral adapter 40 sends service needed after the peripheral device 41 has completed the command operation (e.g., slewing or skipping) specified in the initial transfer sequence.

When the peripheral device 41 desires to communicate to the central memory 10, the peripheral indicates this by informing the peripheral adapter (dotted line from block 695) which may be by an interrupt, a signal line, etc., the indication being a function of the peripheral 41.

When no I/O transmissions are taking place, the peripheral adapter is essentially in an idle mode, depicted by block 680, as being in a loop awaiting a transmission initiation request. When the transmission initiation request is received, the peripheral adapter 40 determines the request is from the peripheral device (PER) (block 690), and if the peripheral adapter had been previously enabled (block 675), a Service Needed message is sent (block 670) to the BSC 32 of DCX 21.

During quiescent periods, the SCCPs 20 poll BSCs 32 for Service Needed. The first SCCP 20 to poll that BSC will service the peripheral adapter. In this manner the SCCP 20 receives the Service Needed message (dotted line from block 670). The SCCP 20 detects the Service Needed and indicates to the PA 40 that the SCCP 20 is ready (block 655), dotted line from block 655) and proceeds to transfer information in accordance with the defined message protocol (block 645). Meanwhile, upon receipt that the SCCP 20 is ready (block 665) the PA 40 proceeds to its transfer counterpart (block 660) and begins the transfer of information between central memory 10 and the peripheral adapter 40 (block 660) in accordance with the defined message protocol. When the transfer is completed (block 685), the peripheral adapter 40 enters the idle state (block 680). When the transmission initiation request is from the SCCP 20, the peripheral adapter 40 makes that determination (block 690) and proceeds to transfer information in accordance with the defined message protocol (block 660). The SCCP initiated transmission request includes the enabling command which may not be followed by any subsequent information transfer from the SCCP 20. The peripheral adapter 40 then returns to the idle loop (block 680) in accordance with the defined message protocol.

## D. Protocol

A message protocol is defined for the orderly transfer of information between the SCCPs 20 and the peripheral adapters 40. An SCCP 20 can initiate an information transfer to a peripheral adapter 40 by issuing an appropriate control message. The message protocol, as defined, does not allow a peripheral adapter 40 to initiate an information transfer to the central system (i.e., to an SCCP 20). (A data processing system comprising the central memory 10, processing element 22, and the I/O processor 23, is sometimes referred to herein as the central system.) A peripheral adapter 40 must wait for a command from an SCCP 20 before it can transfer informtion. The information transfer is on a transmit-response basis. An SCCP 20 issues a message to a peripheral adapter 40 and waits for a response from the peripheral adapter 4O before issuing another message. A peripheral adapter 40 issues a message only in response to a received message. Recovery procedures are defined within the message protocol of the preferred embodiment to allow for the retransmission of any message found to be in error. Error sequences are not described herein. Many alternative approaches to error sequences, which include retry, recovery, etc., are well known and may be implemented by those skilled in the art without departing from the true spirit of the invention.

The defined message protocol is message oriented.

The basic unit of information grouping is a message, the message being the vehicle for every command, every response, and all information that is transmitted. Referring to Fig. 7, a typical message sequence is depicted. A message sequence is initiated by an SCCP 20 by transmitting a sequence starting message to which the peripheral adapter 40 answers with response X, the response being a response message. Message 1 from SCCP 20 is followed by a Response 1 from peripheral adapter 40, the sequence of Message-Response continuing until all the data exchange has occurred. The SCCP 20 then terminates the transmission by initiating a Sequence Ending Message to which the peripheral adapter responds with response Y. A message sequence between an SCCP 20 and a peripheral adapter 40 comprises one or more exchanges, an exchange being defined as a message sent by the SCCP 20 and an appropriate response message returned by the peripheral adapter 40.

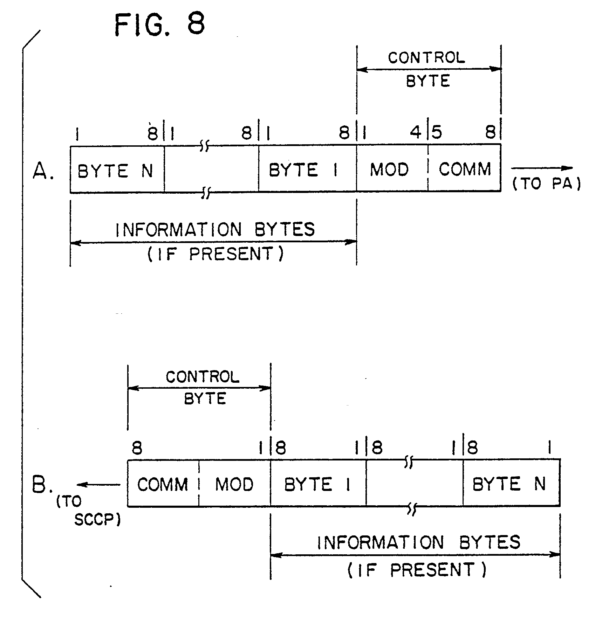

Referring to Fig. 8, the message formats can be seen. Fig. 8A shows the message format from an SCCP 20 to a PA 40, and Fig. 8B shows the message format from a PA 40 to an SCCP 20. Eight-bit bytes are shown with the arrowhead showing the direction of transmission, bit 8 of the control byte being the first bit transmitted. Each message contains a control byte for specifying the command and responses required to control the message transfer, bits 5-8 containing the command and bits 1-4 containing a modifier. A message may or may not contain information bytes, depending on the control byte. The number of information bytes present is variable and not fixed, up to a maximum number of 256 eight-bit bytes in a single message transmission. The defined message protocol calls for the SCCP 20 to issue I/O commands to the peripheral adapters 40, to poll peripheral adapters 40 for I/O data transfer servicing, to abort I/O operations in progress on the peripheral adapters 40 upon command from a processing element 22, and to abort information exchanges between the central system and the peripheral adapters 40 upon command from a processing element 22. In order to implement these I/O control functions, 4 basic initiation commands are defined. They are, command offer (CO), service offer (SO), abort order (AO), and reset (RS). During a message sequence, control byte commands issued by the SCCP 20 include, send information (SI), data appended (DA), command appended (CA), terminate (TRM), continue (CON), message error (MER), and break connection (BC). Control byte commands issued by the peripheral adapter during a message sequence include, send information (SI), literal appended (LA), data appended (DA), status appended (SA), message error (MER), wait (WT), and break (BRK).

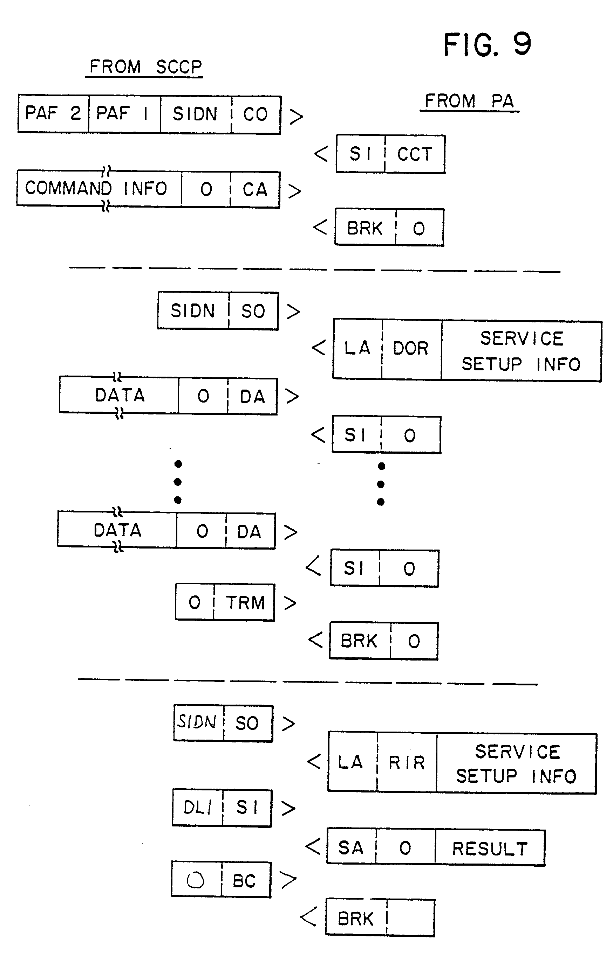

A typical output (from the central system) sequence will now be described. Referring to Fig. 9, the complete output sequence is shown.

The discussion begins with the operations of an SCCP 20. (Recall that a PE 22 causes an SCCP 20 to start with the CIOF message after having set up central memory 10.) The SCCP 20 connects to the proper BSC 32 as specified in the PAF (peripheral address field) and sends a command offer message to the PA 40 along with 2 bytes of control information contained in the PAFs, the CO message being defined as a 3 byte message. The modifier SIDN is a source identifier. The PA 40 responds with a send information message, the modifier CCT of the control byte indicating a control/command count. This response indicates additional command bytes are required. The SCCP 20 sends the addition control information to the PA 40 via the command appended message, the zero modifier (sometimes denoted NULL) indicating the modifier is not used. The PA 40 accepts and stores the control information and returns a break message terminating this part of the transmission. The SCCP 20 breaks the BSC 32 connection and continues to scan for Service Needed messages. Any SCCP 20 which next determines while scanning BSCs 32 that PA 40 requires service will connect to the proper BSC 32 and start a new message sequence with a Service Offer message, containing the source ID modifier. The PA 40 responds with a literal appended message, indicating it is ready to accept the data by the data output ready modifier (DOR), and containing service setup information required by the SCCP. The service setup information is the memory address of IOF, which indicates the address of CM in which the data is to be stored, denoted as "L" field, and the peripheral identifier, which permits verification by the SCCP 20 that the proper IOF fields are being utilized for the peripheral device, denoted as check field or "C" field, The transfer of the L field and C field in the literal appended message by the peripheral adapter allows any SCCP 20 to service the PA 40. The data appended-send information message exchanges continue until all the data has been outputted. The SCCP 20 then ends the sequence with a terminate message, the PA 40 responding with a break (BRK), thereby releasing the SCCP 20. When a BRK message is received, the SCCP 20 updates the IOF Final Byte Count to contain the number of bytes transmitted thus far, thereby providing the necessary information to calculate the next available memory address if the total data transfer has not been completed.

The SCCPs continue the interrogation an SCCP 20 determining an incomplete transfer connects to a BSC 32. The SO message transferred out is responded to by an LA message with the result input ready (RIR) modifier and any service setup information. The SCCP 20 sends an SI message which is responded to by a status appended (SA) message with the result (or status) which may be a status register of the peripheral indicating the results of the transferred data. The SCCP 20 then sends the break connection message and the PA 40 responds with a break, thereby releasing the SCCP 20, completing the data output transfer.

For a peripheral to input data to the central system, the peripheral must first be "enabled" by the PE 22. The PE 22 must set aside an IOF area in central memory and cause a command offer sequence to take place. The PA 40 stores the necessary control information (e.g., memory address of IOF in which the address for data is to be stored) and can pass this information to the SCCP 20 which will subsequently service the PA 40, thereby allowing any SCCP 20 to service the PA 40.

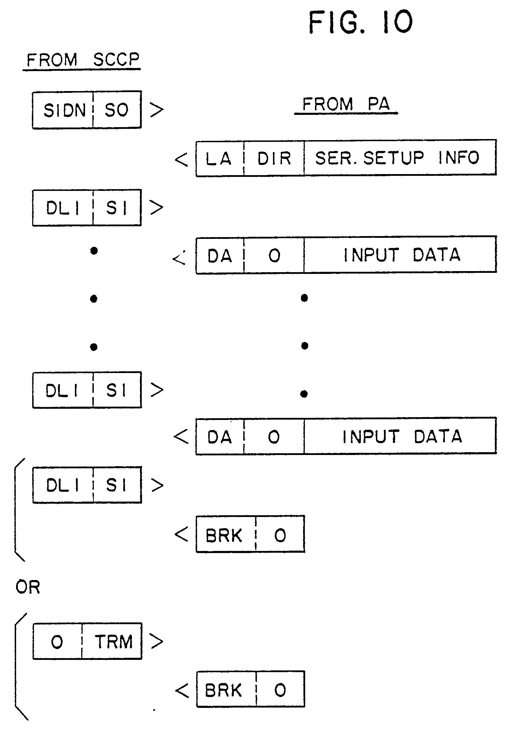

When a peripheral desires to communicate with the central memory 10, the peripheral causes the PA 40 to raise the Service Needed signal. The first SCCP 20 to detect the Service Needed signal (or flag) connects to the BSC 32 and initiates the service offer sequence as shown in Fig. 10. Referring to Fig. 10, the SCCP 20 sends the service offer message. The PA 40 responds with a literal appended message with a data input ready (DIR) modifier. The message also contains information which the SCCP will need to communicate with central memory 10, such as the IOF address. The SCCP 20 then transfers a send information message, the modifier DLI specifying the maximum number of appended bytes the central system can accept in a message from the PA 40. The PA sends the data appended message with the input data, the SI/DA message exchange continuing until the transfer is terminated. The transfer can typically be terminated in one of two ways. The first way shown in Fig. 10, is by the PA by sending a break response to a SI message. The second way the termination is ended is initiated by the central system sending a terminate message with a break response from the PA 40. The status sequence can then take place as in the data output case described above to complete the transfer.

E. SCCP Operation

The operation of an SCCP 20 is achieved by the execution of the microinstructions stored in the control store of the controller 209. The execution of the microinstructions, which serve to configure the control store, implement the defined message protocol as described above.

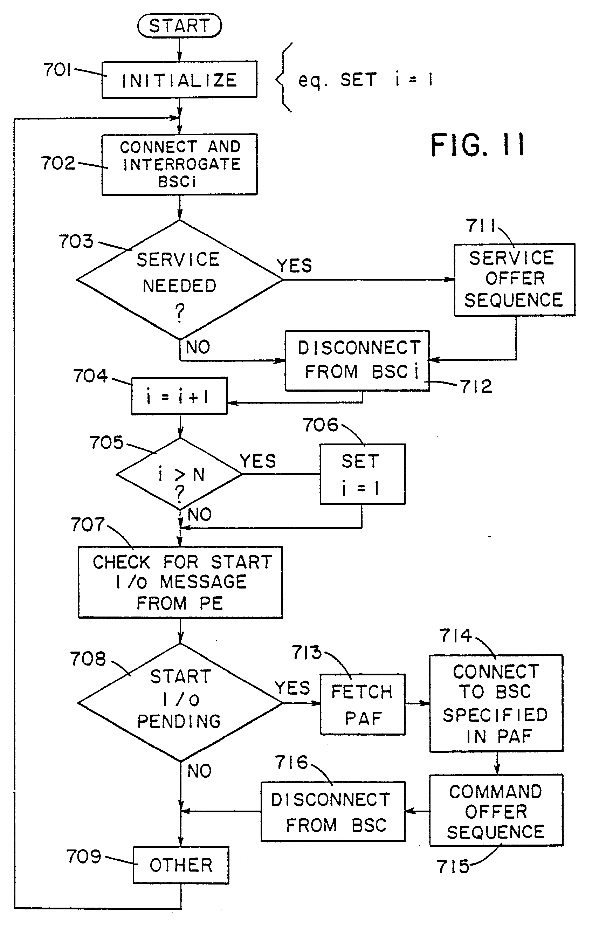

Referring to Fig. 11, the interrogation loop of an SCCP 20 will now be described. When the SCCP 20 operation is first started, some internal initialization is performed, e.g., setting an index i to a value of 1 (block 701). The SCCP 20 then begins the interrogation of the BSCs, starting with BSC1, by connecting to the BSC (block 702). If service is required, a Service Needed flag is raised when the peripheral adapter is ready to start or continue a message sequence (block 703). If the service needed flag is detected, the SCCP 20 enters the service offer sequence (block 711), which will be described in detail below. When the service offer sequence is terminated, the SCCP 20 will disconnect from the BSC 32 (block 712), and proceed. If no service is required as a result of the pending question (block 703) the SCCP 20 disconnects from the BSC 32 and proceeds. The index i is incremented by 1 (block 704) and a check is made to determine if the index is greater than N, the number of ports to which a peripheral adapter 40 is attached (block 705). If the index i is greater than N, the index is reset to the value 1 (block 706), thereby causing the SCCP 20 to reinitiate the polling sequence of the BSCs 32. The SCCP 20 then checks if a start I/O message (i.e., CIOF) has been received from the PE 22 (block 707). If a CIOF message has been received (block 708), the SCCP 20 fetches the peripheral address fields (block 713), connects to the BSC 32 specified in the PAF (block 714), and then begins the command offer sequence (block 715), to be described in detail later. When the command offer sequence has been terminated, the SCCP 20 disconnects from the BSC (block 716) and proceeds. If no CIOF message is received, the SCCP proceeds. Some internal operations are performed (block 709) and the SCCP 20 operation continues by connecting and interrogating the next BSC in the sequence (block 702), thus repeating the interrogation loop.

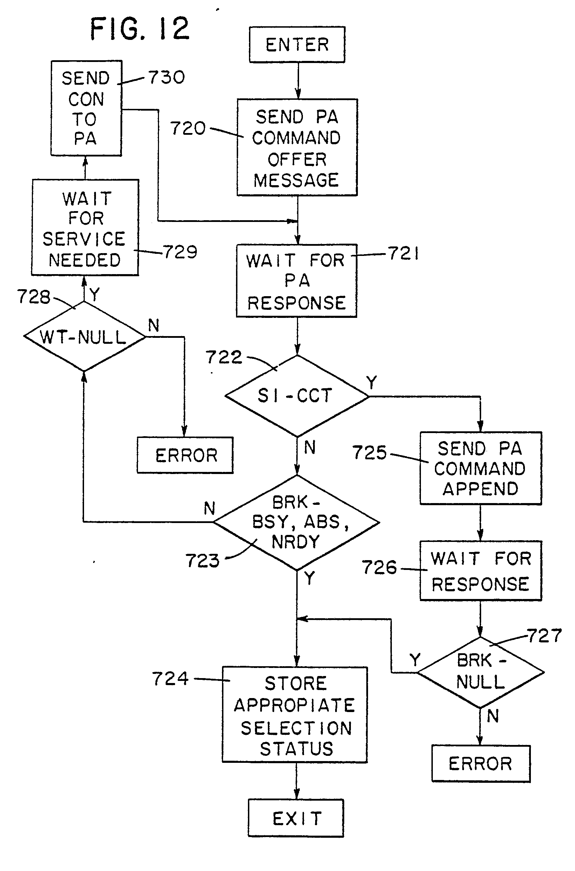

Referring to Fig. 12, the command offer sequence will be described. An SCCP sends a command offer message to a PA 40 (block 720) and waits for a response from PA 40 (block 721). The SCCP 20 checks to determine if the response is send information with a control/command count modifier (SI-CCT) (block 722). If the return message is not an SI-CCT, a check is made for a break message with a busy, absent, or not ready modifier (BRK-BSY, ABS, NRDY) (block 723). If the return message is not a BRK message a check is made for a wait message (WT-NULL) (block 728). If the message is not a wait message, the response is in error and error procedures are entered. If the message is a wait message, the SCCP waits for the service needed indication (block 729), sends a continue message (CON) to PA 40 when service needed is received (block 730), and returns to executing a wait from the PA 40 (block 721). It should be noted here that although the PA 40 is essentially slave to the SCCP 20 (as has been previously mentioned), the wait response from the PA 40 allows the PA 40 the capability to request some control over the SCCP. The wait message is an indication to the SCCP 20 that a response is forthcoming and a break operation (i.e., break-message) should not be performed. Although the wait request may be granted, the SCCP 20 still retains final control and may override the wait request if the requested time duration is excessive. If the message was a BRK message (block 723), the SCCP stores the busy, not attached, or not ready status in the status location of the IOF of central memory 10 and then exits (i.e., continues with the flow as shown in Fig. 11) the command offer sequence. If the response is a SI-CCT, the SCCP 20 sends a command appended message to the PA 40 (block 725) and waits for a response (block 726). When a response is received, a check is made to determine that a BRK-NULL response was received (block 727) since this is the only valid response as defined by the protocol. If the response is not a BRK-NULL message an error exists and error procedures are entered. If the response is BRK-NULL, the SCCP 20 stores the current status (block 724) in CM 10 indicating a successful command offer sequence was completed and exits.

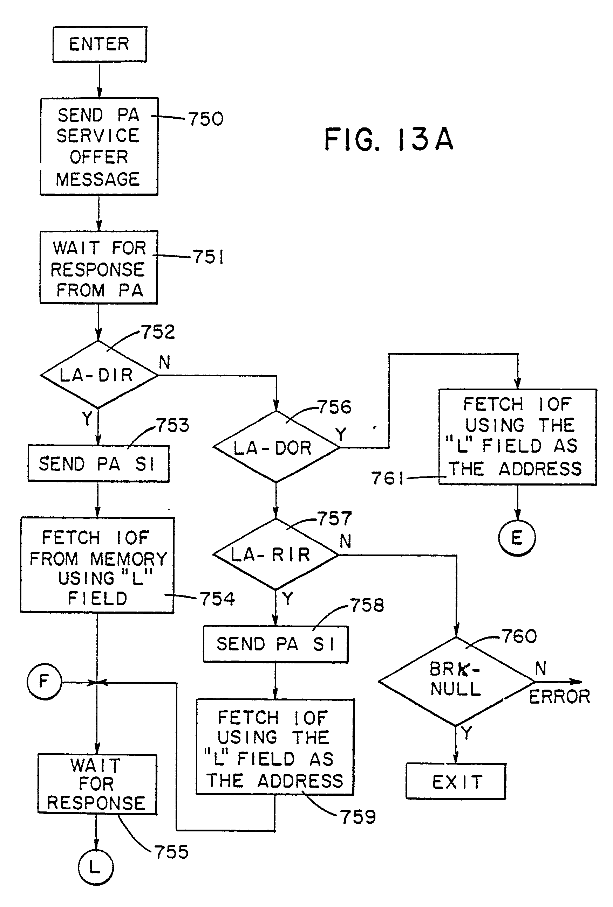

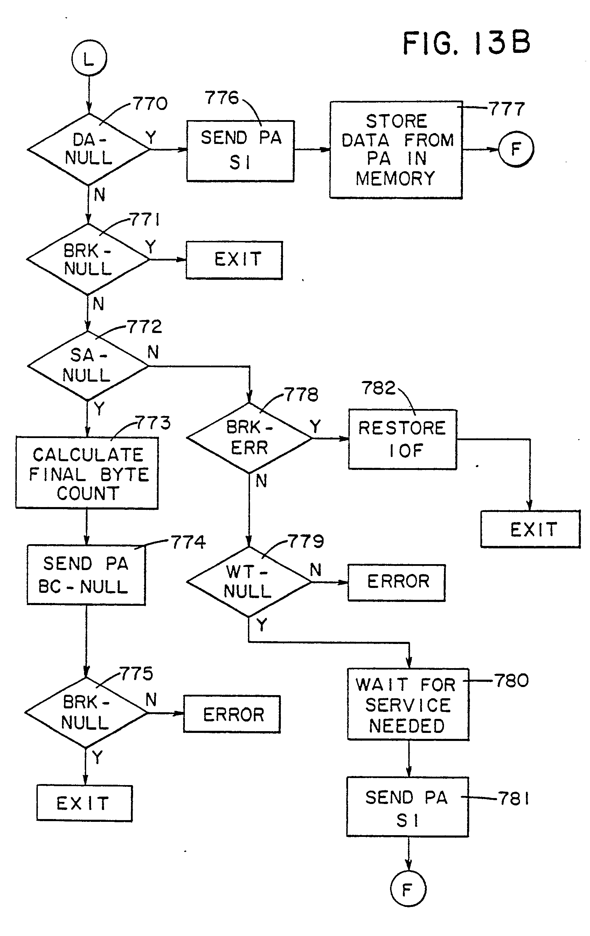

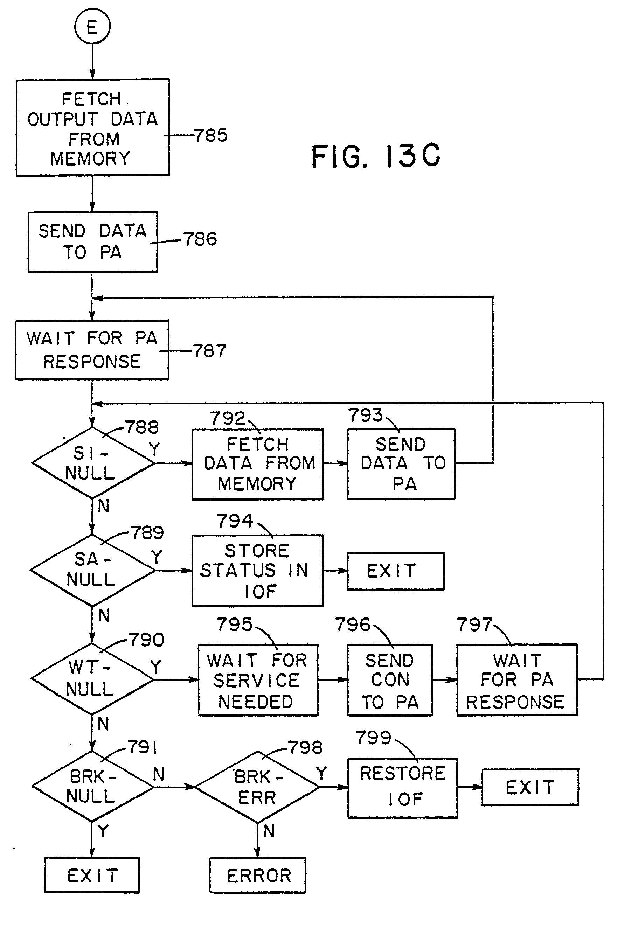

Referring to Figs. 13A-C, the service offer sequence will be described. Upon detecting a Service Needed flag, an SCCP 20 connects to a BSC 32, sends a service offer message to a PA 40 (block 750), and waits for a response from the PA (block 751). The response is checked to determine the control byte command received from the PA 40. The control byte is checked to determine if it is a literal appended with a data input ready modifier, LA-DIR (block 752). If the control byte is not an LA-DIR, it is checked to determine if it is a literal appended with a data output ready modifier, LA-DOR (block 756). If the control byte is not an LA-DOR, it is checked to determine if it is a literal appended with a result input ready modifier, LA-RIR (block 757). If the control byte is not an LA-RIR, it is checked to determine if it is a break, BRK-NULL (block 760). If the control byte is a BRK-NULL, the routine exits. If the control byte is not BRK-NULL, an error exists and error recovery procedures are entered. If the control byte is a LA-RIR (block 757), the SCCP 20 sends a send information (SI) message to the PA 40 (block 758), fetches the IOF from central memory 10 (block 759) and waits for a response (block 755). As discussed above, the LA message from the PA 40 contains service set-up information, denoted in part as L field, which contains the address in central memory 10 specifying the IOF for the PA currently communicating with the CM 10. If the control byte is LA-DIR (block 752), the SCCP 20 sends an SI message to the PA 40 (block 753), fetches the IOF from central memory 10 (block 754), and waits for a response from the PA 40 (block 755).

If the response is a data appended message (block 770), the SCCP 20 sends an SI message to the PA 40 (block 776), stores the data from PA 40 in CM 10 (block 777), and waits for a response from the PA 40 (block 755). This loop continues until all the input data is sent, at which time the PA will respond with BRK-NULL message (block 771) and exit. This will terminate a data input sequence.

If the control byte response was neither a DA-NULL (block 770) nor a BRK-NULL (block 771), a check is made to determine if a status appended message is received (block 772). If the SA message is received, a final byte count is calculated and the result is stored in the STATUS location of the IOF (block 773), a break connection, BC-NULL, is sent to the pA 40 (block 774), a check is made to determine a BRK-NULL is received from PA 40 (block 775), and then exits. If a BRK-NULL is not received, an error condition exists and error recovery procedures are entered. If an SA-NULL is not received (block 772) a check is made for other valid responses. If a BRK-ERR is received (block 778), the response is stored in STATUS of IOF (block 782) and the service offer sequence is exited. If a BRK-ERR is not received a wait (WT-NULL) message is checked for (block 779). If a WT-NULL is not received an error exists and error recovery procedures are entered. If a WT-NULL is received (block 779), the SCCP 20 waits for the service needed indication (block 780), sends a SI message to PA 40 (block 781), and awaits a response (block 755).

If the initial LA response to the SO message is a literal appended with a data output ready modifier, LA-DOR (block 756), the SCCP 20 fetches the IOF from central memory 10 (block 761), fetches the output data from CM 10 (block 785), sends the data to PA 40 (block 786) via a data appended message, and waits for a response from PA 40 (block 787). When the response is received, it is checked for a send information, SI-NULL, (block 788), and if the response is SI-NULL, the output data is fetched from CM 10 (block 792), sent to PA 40 via a data appended message (block 793), and the SCCP then waits for a response (block 787). This loop continues until all the data has been outputted.

If the response is not SI-NULL (block 788), a check is made to determine if it is a status appended, SA-NULL (block 789). If the response is SA-NULL, the status message is stored in STATUS of IOF of CM 10 (block 794) and the service offer sequence is exited.

If the response is not SA-NULL, a check is made to determine if the response is a wait, WT-NULL (block 790). If a WT-NULL message is sent, the SCCP 20 waits for a service needed indication (block 795), sends a continue message to the PA 40 (block 796), and waits for a response from the PA 40 (block 797). If the message is not WT-NULL, a check is made for a break BRK-NULL (block 791). If the message is a BRK-NULL, the service offer sequence is exited, terminating the data output sequence. If the message is not BRK-NULL, a check is made for a BRK-ERR message (block 798). If the message is not BRK-ERR an error situation exists and error recovery procedures are entered. If the message is BRK-ERR, the SCCP 20 stores the response in STATUS of IOF in central memory 10 (block 799) and the service offer sequence is exited.

## Claims

1. A method of communication in a data processing system having at least one processing element (22), a central memory (10) coupled thereto and an I/O processor (23) coupled to said central memory, and wherein said I/O processor has a plurality n of bit serial channel ports (32) for providing a corresponding plurality of transmission paths in a bit serial link format for communicating information to a corresponding plurality n of peripheral subsystems (30), characterized in that said I/O processor has a plurality m, where n is greater than m, of serial channel control processors (20) and a dynamic channel exchange (27) coupled to said serial channel control processors, said method of communication including the steps of: a) checking for a processing element request for communication with one of said plurality of peripheral subsystems (30); b) performing an initial communication sequence with the peripheral subsystem (30) selected in response to said processing element request, said initial communication sequence comprising a first plurality of message exchanges between one of said serial channel control processors (20) and the selected peripheral subsystem; c) polling said plurality of bit serial channel ports (32) for detecting the existence of a peri heral ready indication from a peripheral subsystem (30) in respect of which a said initial communication sequence has been performed; and d) performing a further communication sequence with the peripheral subsystem in respect of which a peripheral ready indication was detected in step c), said further communication sequence comprising a second plurality of message exchanges between said peripheral subsystem and an available serial channel control processor (20) which may be different from said one of said serial channel control processors.

2. A method of communication according to claim 1, characterized in that the step of performing said initial communication sequence includes the steps of: a) causing a serial channel control processor (20) to transmit a first output message indicating an initializing or enabling condition for the relevant peripheral subsystem (30) and further containing control and command information for the peripheral subsystem; b) said serial channel control processor (20) receiving a request message in response to said first output message indicating the peripheral subsystem (30) is ready to receive additional control and command information; c) transmitting a second output message containing additional control and command information; and d) receiving an end message from the peripheral subsystem indicating a termination of the communication sequence.

3. A method of communication according to claim 1, characterized in that the step of performing said initial communication sequence further includes the steps of: a) initiating a serial channel control processor transmission of a first output message indicating an initializing or enabling condition for the relevant peripheral subsystem and further containing control and command information for the peripheral subsystem (30); b) a serial channel control processor (20) receiving a request message in response to said first output message indicating the peripheral subsystem (30) is ready to receive additional control and command information; c) transmitting a second output message containing additional control and command information, said control and command information or said additional control and command information including a first control field indicating the address of said central memory (10) in which the data is to be stored, and a second control field containing a peripheral identifier; and d) receiving an end message from the peripheral subsystem (30) indicating a termination of the communication sequence.

4. A method of communication according to claim 1, characterized in that the step of performing said further communication sequence includes the steps of: a) initiating an initial message indicating a readiness of the relevant serial channel control processor (20); b) receiving a first response message indicating a readiness by the relevant peripheral subsystem (30) to receive or send data; c) transmitting a data message to the peripheral subsystem when said first response message indicates a readiness by the peripheral subsystem to receive data or transmitting a request message indicating the serial channel control processor readiness to receive data when said first response message indicates a readiness to send data; d) receiving said request message when said first response message indicates a readiness by the peripheral subsystem, (30) to receive data or receiving said data message when said first response message indicates a readiness by the peripheral subsystem to send data; e) repeating last-mentioned steps c) and d) until all the data for transmission has been transferred; f) transmitting a terminate message; and g) receiving an end message.

5. A method of communication according to claim 1, characterized in that the step of performing said further communication sequence includes the steps of: a) transmitting an initial message indicating a readiness of the relevant serial channel control processor (20); b) receiving a first response message indicating a readiness by the relevant peripheral subsystem to receive or send data, said first response message further containing control information, said control information including a first field indicating the address of said central memory (10) in which the data is to be stored, and a second field containing a peripheral identifier; c) transmitting a data message to the peripheral subsystem (30) when said first response message indicates a readiness by the peripheral subsystem to receive data or transmitting a request message indicating the serial channel control processor readiness to receive data when said first response message indicates a readiness to send data; d) receiving said request message when said first response message indicates a readiness by the peripheral subsystem to receive data or receiving said data message when said first response message indicates a readiness by the peripheral subsystem to send data; e) repeating last-mentioned steps c) and d) until all the data for transmission has been transferred; f) transmitting a terminate message; and g) receiving an end message.

**Patentansprüche**

1. Kommunikationsverfahren in einem Datenverarbeitungssystem, das zumindest ein Verarbeitungselement (22), einen damit gekoppelten Zentralspeicher (10) und einen Eingangs/Ausgangs-(I/O)-Prozessor (23) aufweist, der mit dem Zentralspeicher gekoppelt ist, und wobei der I/O-Prozessor eine Vielzahl n von bitseriellen Kanalanschlüssen (32) zur Bildung einer entsprechenden Vielzahl von Übertragungswegen in einem bitseriellen Kopplungsformat für einen Informationsaustausch zu einer entsprechenden Vielzahl n peripherer Subsysteme (30) aufweist, dadurch gekennzeichnet, daß der I/O-Prozessor eine Vielzahl m, mit n größer als m, serielle Kanalsteuer-Prozessoren (20) und einen mit den seriellen Kanalsteuer-Prozessoren gekoppelten dynamischen Kanalaustauscher (21) aufweist, wobei das Kommunikationsverfahren die Schritte einschließt: a) Prüfen einer Verarbeitungselement-Anforderung auf eine Kommunikation mit einem der Vielzahl von peripheren Subsystemen (30); b) Durchführen einer Einleitungskommunikationssequenz mit dem unter Ansprechen auf die Verarbeitungselement-Anforderung ausgewählten peripheren Subsystem (30), wobei die Einleitungskommunikationssequenz eine erste Vielzahl von Nachrichtenaustauschvorgängen zwischen einem der seriellen Kanalsteuer-Prozessoren (20) und dem ausgewählten peripheren Subsystem aufweist; c) Abfragen der Vielzahl von bitseriellen Kanalanschlüssen (32) zum Feststellen des Vorhandenseins einer peripheren Bereitanzeige eines peripheren Subsystems (30), bezüglich den eine Einleitungskommunikationsfolge durchgeführt worden ist; und d) Durchführen einer Kommunikationssequenz mit dem peripheren Subsystem, bezüglich den eine periphere Bereitanzeige im Schritt c) festgestellt wurde, wobei die weitere Kommunikationssequenz eine zweite Vielzahl von Nachrichtenaustauschvorgängen zwischen dem peripheren Subsystem und einem verfügbaren seriellen Kanalsteuer-Prozessor (20) aufweist, der von dem einen der seriellen Kanalsteuer-Prozessoren verschieden sein kann.

2. Ein Kommunikationsverfahren nach Anspruch 1, dadurch gekennzeichnet, daß der Schritt Durchführen der Einleitungskommunikationsfolge die Schritte aufweist: a) Bewirken, daß ein serieller Kanalsteuer-Prozessor (20) eine erste Ausgangsnachricht aussendet, die einen Einleitungs- oder Aktivierungszustand für das relevante periphere Subsystem (30) anzeigt, und ferner Steuer- und Befehlsinformationen für das periphere Subsystem enthält; b) Empfangen einer Anforderungsnachricht durch den seriellen Kanalsteuer-Prozessor (20) unter Ansprechen auf die erste Ausgangsnachricht, was anzeigt, daß das periphere Subsystem (30) bereit ist, zusätzliche Steuer- und Befehlsinformationen zu empfangen; c) Aussenden einer zweiten Ausgangsnachricht, die zusätzliche Steuer- und Befehlsinformationen enthält; und d) Empfangen einer Ende-Nachricht von dem peripheren Subsystem, was eine Beendigung der Kommunikationsfolge anzeigt.

3. Ein Kommunikationsverfahren nach Anspruch 1, dadurch gekennzeichnet, daß der Schritt Durchführen einer Einleitungskommunikationsfolge ferner die Schritte aufweist: a) Einleiten einer Aussendung einer ersten Ausgangsnachricht durch den seriellen Kanalsteuer-Prozessor, die einen Einleitungs- oder Aktivierungszustand für das relevante periphere Subsystem anzeigt und ferner Steuer- und Befehlsinformationen für das periphere Subsystem (30) enthält; b) Empfangen einer Anforderungsnachricht durch den seriellen Kanalsteuer-Prozessor (20) unter Ansprechen auf die erste Ausgangsnachricht, was anzeigt, daß das periphere Subsystem (30) bereit ist, zusätzliche Steuer- und Befehlsinformationen zu empfangen; c) Aussenden einer zweiten Ausgangsnachricht, die zusätzliche Steuer- und Befehlsinformationen enthält, wobei die Steuer und Befehlsinformationen oder die zusätzlichen Steuer- und Befehlsinformationen ein erstes Steuerfeld aufweisen, das die Adresse des Zentralspeichers (20) angibt, in der die Daten zu speichern sind, und ein zweites Steuerfeld, das einen peripheren Identifizierer enthält; und d) Empfangen einer Ende-Nachricht von dem peripheren Subsystem (30), die eine Beendigung der Kommunikationsfolge anzeigt.

4. Ein Kommunikationsverfahren nach Anspruch 1, dadurch gekennzeichnet, daß der Schritt Durchführen der weiteren Kommunikationsfolge die Schritte aufweist: a) Einleiten einer Einleitungsnachricht, die eine Bereitschaft des relevanten seriellen Kanalsteuer-Prozessors (20) anzeigt; b) Empfangen einer ersten Antwortnachricht durch das relevante periphere Subsystem (30), die eine Bereitschaft anzeigt, Daten zu empfangen oder zu senden; c) Aussenden einer Datennachricht zu dem peripheren Subsystem, wenn die erste Antwortnachricht eine Bereitschaft des peripheren Subsystems anzeigt, Daten zu empfangen oder eine Anforderungsnachricht auszusenden, die die Bereitschaft des seriellen Kanalsteuer-Prozessors anzeigt, Daten zu empfangen, wenn die erste Antwortnachricht eine Bereitschaft, Daten zu senden, anzeigt; d) Empfangen der Anforderungsnachricht, wenn die erste Antwortnachricht eine Bereitschaft des peripheren Subsystems (30) anzeigt, Daten zu empfangen, oder Empfangen der Datennachricht, wenn die erste Antwortnachricht eine Bereitschaft des peripheren Subsystems anzeigt, Daten zu senden; e) Wiederholen der letztgenannten Schritte c) und d), bis alle zu sendenden Daten übertragen worden sind; f) Ausenden einer Beendigungsnachricht; und g) Empfangen einer Ende-Nachricht.

5. Ein Kommunikationsverfahren nach Anspruch 1, dadurch gekennzeichnet, daß der Schritt Durchführen der weiteren Kommunikationssequenz die Schritte aufweist: a) Aussenden einer Einleitungsnachricht, die eine Bereitschaft des relevanten seriellen Kanalsteuer-Prozessors (20) anzeigt; b) Empfangen einer ersten Antwortnachricht, die eine Bereitschaft des relevanten peripheren Subsystems zeigt, Daten zu empfangen oder zu senden; wobei die erste Antwortnachricht ferner Steuerinformationen enthält, wobei die Steuerinformationen ein erstes Feld enthalten, das die Adresse in dem Zentralspeicher (10) angibt, in der die Daten zu speichern sind, und ein zweites Feld, das einen peripheren Identifizierer enthält; c) Aussenden einer Datennachricht zu dem peripheren Subsystem (30), wenn die erste Antwortnachricht eine Bereitschaft des peripheren Subsystems anzeigt, Daten zu empfangen, oder Aussenden einer Anforderungsnachricht, das die Bereitschaft des seriellen Kanalsteuer-prozessors anzeigt, Daten zu empfangen, wenn die erste Antwortnachricht eine Bereitschaft anzeigt, Daten zu senden; d) Empfangen der Anforderungsnachricht, wenn die erste Antwortnachricht eine Bereitschaft des peripheren Subsystems anzeigt, Daten zu empfangen, oder Empfangen der Datennachricht, wenn die erste Antwortnachricht eine Bereitschaft des peripheren Subsystems anzeigt, Daten zu senden; e) Wiederholen der letztgenannten Schritte c) und d) bis alle zu sendenden Daten übertragen worden sind; f) Übertragen einer Beendigungsnachricht; und g) Empfangen einer Ende-Nachricht.

**Revendications**

1. Procédé de communication dans un système de traitement de données ayant au moins un élément de traitement (22), une mémoire centrale (10) qui lui est connectée et un processeur d'entrée/sortie (23) connecté à ladite mémoire centrale, et dans lequel ledit processeur d'entrée/sortie possède une pluralité n d'accès (32) de canaux à bits en série pour établir une pluralité correspondant de trajets de transmission dans un format de liaison en série par bits pour communiquer une information à un groupe correspondant n de sous-systèmes périphériques (30), caractérisé en ce que ledit processeur d'entrée/sortie possède une pluralité m, où n est supérieur à m, de processeurs (20) de contrôle de canaux en série et un centre (21) de canaux dynamiques connecté auxdits processeurs de contrôle de canaux en série, ledit procédé de communication comprenant les étapes qui consistent: a) à contrôler la demande, par un élément de traitement, de communiquer avec l'un dudit groupe de sous-systèmes périphériques (30); b) à exécuter une séquence de communication initiale avec le sous-système périphérique (30) choisi en réponse à ladite demande d'un élément de traitement, ladite séquence de communication initiale comprenant une première pluralité d'échanges de messages entre un premier desdits processeurs (20) de contrôle de canaux en série et le sous-système périphérique choisi; c) à interroger ladite pluralité d'accès (32) de canaux à bits en série pour détecter l'existence d'une indication périphérique prête provenant d'un sous-système périphérique (30) à l'égard duquel ladite séquence de communication initiale a été effectuée; et d) à exécuter une autre séquence de communication avec le sous-système périphérique à l'égard duquel une indication périphérique prête a été détectée à l'étape c), ladite autre séquence de communication comprenant une seconde pluralité d'échanges de messages entre ledit sous-système périphérique et un processeur (20) de contrôle de canal en série disponible, qui peut être différent dudit premier desdits processeurs de contrôle de canaux en série.

2. Procédé de communication selon la revendication 1, caractérisé en ce que l'étape d'exécution de ladite séquence de communication initiale comprend les étapes qui consistent: a) à amener un processeur (20) de contrôle de canal en série à transmettre un premier message de sortie indiquant un état d'initialisation ou de validation pour le sous-système périphérique concerné (30) et contenant en outre une information de contrôle et d'ordre de commande pour le sous-système périphérique; b) ledit processeur (20) de contrôle de canal en série recevant un message de demande en réponse audit premier message de sortie indiquant que le sous-système périphérique (30) est prêt à recevoir une information supplémentaire de contrôle et d'ordre de commande; c) à transmettre un second message de sortie contenant une information supplémentaire de contrôle et d'ordre de commande; et d) à recevoir un message de fin provenant du sous-système périphérique, indiquant une terminaison de la séquence de communication.

3. Procédé de communication selon la revendication 1, caractérisé en ce que l'étape d'exécution de ladite séquence de communication initiale comprend en outre les étapes qui consistent: a) à lancer une transmission par le processeur de contrôle de canal en série d'un premier message de sortie indiquant un état d'initialisation ou de validation pour le sous-système périphérique concerné et contenant en outre une information de contrôle et d'ordre de commande pour le sous-système périphérique (30); b) à recevoir, par un processeur (20) de contrôle de canal en série, un message de demande en réponse audit premier message de sortie indiquant que le sous-système périphérique (30) est prêt à recevoir une information supplémentaire de contrôle et d'ordre de commande; c) à transmettre un second message de sortie contenant une information supplémentaire de contrôle et d'ordre de commande, ladite information de contrôle et d'ordre de commande ou ladite information supplémentaire de contrôle et d'ordre de commande contenant une première zone de contrôle indiquant l'adresse de ladite mémoire centrale (10) dans laquelle les données doivent être stockées, et une seconde zone de contrôle contenant un identificateur de périphérique, et d) à recevoir un message de fin provenant du sous-système périphérique (30), indiquant une terminaison de la séquence de communication.

4. Procédé de communication selon la revendication 1, caractérisé en ce que l'étape d'exécution de ladite autre séquence de communication comprend les étapes qui consistent: a) à lancer un message initial indiquant que le processeur concerné (20) de contrôle des canaux en série est prêt; b) à recevoir un premier message de réponse indiquant que le sous-système périphérique concerné (30) est prêt à recevoir ou à émettre des données; c) à transmettre un message de données au sous-système périphérique lorsque ledit premier message de réponse indique que le sous-système périphérique est prêt à recevoir des données, ou à transmettre un message de demande indiquant que le processeur de contrôle des canaux en série est prêt à recevoir des données lorsque ledit premier message de réponse indique un état prêt à émettre des données; d) à recevoir ledit message de demande lorsque ledit premier message de réponse indique que le sous-système périphérique (30) est prêt à recevoir des données, ou à recevoir ledit message de données lorsque ledit premier message de réponse indique que le sous-système périphérique est prêt à émettre des données; e) à répéter les dernières étapes citées c) et d) jusqu'à ce que toutes les données à transmettre aient été transférées; f) à transmettre un mesage de terminaison; et g) à recevoir un message de fin.

5. Procédé de communication selon la revendication 1, caractérisé en ce que l'étape d'exécution de ladite autre séquence de communication comprend les étapes qui consistent a) à transmettre un message initial indiquant que le processeur concerné (20) de contrôle des canaux en série est prêt; b) à recevoir un premier message de réponse indiquant que le sous-système périphérique concerné est prêt à recevoir ou à émettre des données, ledit premier message de réponse contenant en outre une information de contrôle, ladite information de contrôle contenant une première zone indiquant l'adresse de ladite mémoire centrale (10) dans laquelle les données doivent être stockées, et une seconde zone contenant un identificateur périphérique; c) à transmettre un message de données au sous-système périphérique (30) lorsque ledit premier message de réponse indique que le sous-système périphérique est prêt à recevoir des données, ou à transmettre un message de demande indiquant que le processeur de contrôle des canaux en série est prêt à recevoir des données lorsque ledit premier message de réponse indique un état prêt à émettre des données; d) à recevoir ledit message de demande lorsque ledit premier message de réponse indique que le sous-système périphérique est prêt à recevoir des données, ou à recevoir ledit message de données lorsque ledit premier message de réponse indique que le sous-système périphérique est prêt à émettre des données; e) à répéter les dernières étapes citées c) et d) jusqu'à ce que toutes les données à transmettre aient été transférées; f) à transmettre un message de terminaison; et g) à recevoir un message de fin.

## FIG. I

10 — CENTRAL MEMORY

24

INTERNAL TRANSFER BUS

23

SCCP • • • • SCCP    PE • • • PE

20    20    22    22'

21

DCX

0    I    N-I

32    • • •    32

31

30"

30'

PA — 40'

40" — PA

P

40 — PA

41G

P — 41D

P — 41E

P — 41F

30

P — 41A

P — 41B

P — 41C

1

# FIG. 2

| | |
|---|---|
| N - X | C FIELD |
| | PERIPHERAL ADDRESS FIELD (PAF 1) |
| | PERIPHERAL ADDRESS FIELD (PAF 2) |
| | ⋮ |
| LOCATION N | PERIPHERAL ADDRESS FIELD X (PAF X) |
| N + 1 | STARTING MEMORY ADDRESS |
| N + 2 | TOTAL BYTE COUNT |
| + 3 | STATUS |
| + 4 | FINAL BYTE COUNT |
| + 5 | |
| + 6 | |

# FIG. 3

# FIG. 4

EP 0 055 763 B1

## FIG. 5A

| | | | | | | | | | | | | | | | |
|---|---|---|---|---|---|---|---|---|---|---|---|---|---|---|---|
BIT

| | | | | | |
|---|---|---|---|---|---|
| 1        6 | 7 | 8 | 9    11 | 12       16 | 17      29 | 30    32 |
| OP - CODE | | | TEST MUX CODE | ALU CONTROL | LITERAL OR BRANCH ADDRESS | BRANCH CONTROL |

BRANCH OPTION

## FIG. 5B

BIT

| | | | | | |
|---|---|---|---|---|---|
| 1        6 | 7 | 8 | 9    12 | 13       16 | 17      29 | 30    32 |
| OP - CODE | | | BUS SOURCE | BUS DESTINATION | LITERAL OR BRANCH ADDRESS | BRANCH CONTROL |

BRANCH OPTION

FIG. 6A

600 — PROCESS INITIATE I/O

601 — PE LOADS IOF AND DATA IN CM

PE 22

605 — PE SENDS CHECK IOF MESSAGE TO SCCP → CONT

610 — POST STATUS

TIME-OUT OR INTERRUPT

PROCESS TERMINATE I/O

SCCP 20

620 — INTERROGATE FOR CIOF OR SN

625 — DETERMINE REQUEST

SN

CIOF

655 — INDICATE TO PA THAT SCCP IS READY

630 — FETCH IOFS FROM CM

635 — SEND INITIATING COMMAND TO PA

650 — POST STATUS INFO IN CM

640 — COMMAND RECEIVED ?

NO

YES

645 — TRANSFER INFO BETWEEN CM & PA

6

FIG. 6B

PA 40

660 — TRANSFER INFO BETWEEN CM & PA

665 — IS SCCP READY ? — YES / NO

685 — END OF TRANSFER OR ABORT

670 — SEND SN

675 — IS PA ENABLED ? — YES / NO

690 — INITIATED BY ? — PER / SCCP

680 — COMM DESIRED ? — YES / NO

PERIPHERAL 41

695 — PERIPHERAL DESIRES TO COMMUNICATE TO CM

7

FIG. 6C

FIG. 6A

FIG. 6B

FIG. 7

FROM SCCP

SEQUENCE STARTING MESSAGE

MESSAGE 1

MESSAGE 2

•
•
•

MESSAGE N

SEQUENCE ENDING MESSAGE

FROM PA

RESPONSE X

RESPONSE 1

RESPONSE 2

•
•
•

RESPONSE N

RESPONSE Y

# FIG. 8

EP 0 055 763 B1

# FIG. 9

FROM SCCP

FROM PA

| PAF 2 | PAF I | SIDN ¦ CO | >

< | S I ¦ CCT |

| COMMAND INFO | O ¦ CA | >

< | BRK ¦ O |

---

| SIDN ¦ SO | >

< | LA ¦ DOR | SERVICE SETUP INFO |

| DATA | O ¦ DA | >

< | S I ¦ O |

| DATA | O ¦ DA | >

< | S I ¦ O |

| O ¦ TRM | >

< | BRK ¦ O |

---

| SIDN ¦ SO | >

< | LA ¦ RIR | SERVICE SETUP INFO |

| DLI ¦ S I | >

< | SA ¦ O | RESULT |

| O ¦ BC | >

< | BRK ¦ |

10

# FIG. 10

FROM SCCP

FROM PA

11

FIG. 11

FIG. 12

# FIG. 13A

FIG. 13B

# FIG. 13C

E

FETCH.
OUTPUT DATA
FROM
MEMORY — 785

SEND DATA
TO PA — 786

WAIT FOR PA
RESPONSE — 787

788
SI -
NULL — Y → FETCH
DATA FROM
MEMORY 792 → SEND
DATA TO
PA 793

N

789
SA -
NULL — Y → STORE
STATUS IN
IOF 794 → EXIT

N

790
WT -
NULL — Y → WAIT FOR
SERVICE
NEEDED 795 → SEND
CON
TO PA 796 → WAIT
FOR PA
RESPONSE 797

N

791
BRK -
NULL — N → BRK -
ERR 798 — Y → RESTORE
IOF 799 → EXIT

Y                    N

EXIT              ERROR